# EUROPEAN PATENT APPLICATION

(11) **EP 1 574 755 A2**
(43) Date of publication of application: **14.09.2005**
(21) Application number: 05251503.8
(22) Date of filing: 11.03.2005
(51) Int. Cl.: F16H 33/06, H02K 7/06, E05B 47/00, E05B 65/12

(54) **Actuator assembly**

(30) Priority: 13.03.2004 GB 0405695
(71) Applicant: ArvinMeritor Light Vehicle Systems (UK) Ltd, West Midlands, B30 3BW (GB)
(72) Inventor: Fisher, Sidney Edward, Redditch Worcestershire, B97 5YS (GB)
(74) Representative: Jones, John Bryn

(57) **Abstract**

A sub-assembly for an actuator assembly, including an output member (116), and a spring arrangement having at least one helical return spring (118), the output member (116) being rotatable between a neutral position, a first actuated position, and a second actuated position, the neutral position being between the first and second actuated positions, the output member (116) capable of being moved from the neutral position to the first actuated position and to the second actuated position, in which the spring arrangement is arranged so as to bias the output member (116) towards the neutral position from the first actuated position, and is also arranged to bias the output member towards the neutral position from the second actuated position,
the output member (116) including a recess (132) for receiving the at least one helical return spring (118),
the sub-assembly further including a retention means (160) for retaining the at least one helical return spring (118) in the recess (132),
the retention means (160) including a slot arrangement (162) to allow insertion of the at least one helical return spring (118) into the recess (132).

## Description

The present invention relates to actuator assemblies, and in particular to actuator assemblies for use with latches for vehicle doors and other closures.

Known vehicle door latch actuator assemblies include actuators in the form of electric motors to move components of a latch between a locked and an unlocked position.

After the motor has moved the latch to the locked or unlocked position, the motor is powered back in the opposite direction to the neutral position so that when the latch is manually locked or unlocked, for example using a key or a sill button, it is not necessary to manually drive the motor back to the neutral position, thus reducing the effort required.

Known vehicle door latch actuator assemblies include a return mechanism employing a helical spring, i.e. a spring of constant diameter with the coils extending in more than one plane.

As the motor drives in one direction the helical spring is wound up so that when power to the motor is cut, the spring unwinds and biases the motor back towards the neutral position. Thus the need to manually drive the motor back in the opposite direction is avoided. The helical spring is arranged such that the plane defined by the coils of the spring lies substantially parallel to the direction in which the spring is wound when the motor is driven.

The problem with known return mechanisms is that, when loaded, there is a tendency for the stress to concentrate in one area of the helical spring, thereby reducing its fatigue life, resulting in the failure of the return mechanism.

A further problem associated with the use of helical springs is the assembly of the spring into the return mechanism. The resilient nature of the spring means that if unretained, the spring can become free from its seating and thereby become lost during the assembly process. This is costly in terms of wasted components and subsequent failure of the return mechanism. Such faults may even present a safety hazard if the escaped spring causes an obstruction in the assembly line.

An object of the present invention is to provide an improved sub-assembly for an actuator assembly.

Thus according to the present invention there is provided an actuator assembly including an actuator, an output member, and a spring arrangement having at least one helical return spring, the output member being rotatable between a neutral position, a first actuated position, and a second actuated position, the neutral position being between the first and second actuated positions, the output member capable of being driven by the actuator from the neutral position to the first actuated position and to the second actuated position, the at least one helical return spring arranged such that a plane defined by a coil of the spring lies substantially perpendicular to the direction in which the spring is compressed when the actuator is driven, in which the spring arrangement is arranged so as to bias the output member towards the neutral position from the first actuated position, and is also arranged to bias the output member towards the neutral position from the second actuated position.

According to a second aspect of the present invention there is provided a method of assembling a sub-assembly for an actuator assembly, including the steps of:-
a) providing an output member having a recess for receiving at least one helical return spring
b) providing at least one helical return spring
c) providing retention means for retaining the at least one helical spring in the recess, the retention means including at least one slot to allow insertion of the at least one helical spring into the recess, the method further including the steps of
d) inserting the at least one helical spring through the at least one slot into the recess.

The invention will now be described by way of example only with reference to the accompanying drawings, in which:
Figure 1 is a plan view of an actuator assembly according to a first embodiment of the present invention,
Figure 2 is a perspective view of the helical spring of the actuator assembly of figure 1 prior to being preformed,
Figure 2b is a perspective view of the helical spring of the actuator assembly of figure 1 after being preformed,
Figure 3 is an exploded perspective view of part of the actuator assembly of figure 1 prior to assembly,
Figure 4 is a plan view of part of the actuator assembly of figure 1 in the neutral position,
Figure 5 is a plan view of part of the actuator assembly of figure 1 after actuation to the first actuated position,
Figure 6 is a plan view of part of the actuator assembly of figure 1 after actuation to the second actuated position,
Figures 7 to 9 are exploded perspective views corresponding to figures 4 to 6 respectively,
Figure 10 is an exploded perspective view of part of an actuator assembly according to a second embodiment of the present invention,
Figure 11 is a plan view of part of the actuator assembly of figure 10 after assembly (hidden detail of the spring being shown),
Figure 12 is an exploded perspective view of part of an actuator assembly according to a third embodiment of the present invention,
Figure 13 is a plan view of part of the actuator assembly of figure 12 in a neutral position after assembly,
Figure 14 is a plan view of part of the actuator assembly of figure 12 after actuation to the first actuated position,
Figure 15 is a plan view of part of the actuator assembly of figure 12 after actuation to the second actuated position,
Figure 16 is an exploded perspective view of part of an actuator assembly according to a fourth embodiment of the present invention prior to assembly,
Figure 17 is a plan view of part of the actuator assembly of figure 16 after assembly, and
Figure 18 is a schematic view of a latch assembly including an actuator assembly according to the present invention.

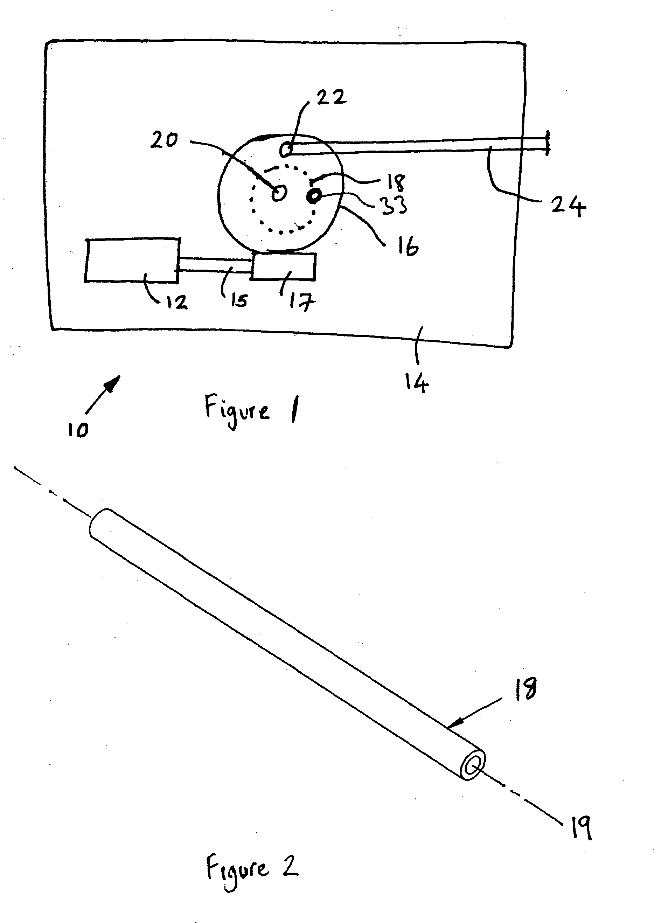

With reference to figure 1, there is shown an actuator assembly 10 including an actuator in the form of an electric motor 12, a chassis 14, an output member in the form of a gear wheel 16, and a helical return spring 18 (shown hidden in figure 1).

The gear wheel is rotationally mounted on the chassis 14 at pivot pin 20 and includes an output in the form of a pin 22 mounted thereon which is connected to a linkage 24. Linkage 24 is connected to a device (not shown in figure 1) which is required to be actuated.

The electric motor 12 is drivingly connected to the gear wheel 16 by worm gear 17. The worm gear 17 is mounted rotationally fast on electric motor shaft 15 and engages with the gear wheel 16 via gear teeth (not shown). It can be seen from figure 1 that the electric shaft 15 and the worm gear 17 form a transmission path between the electric motor 12 and the gear wheel 16 such that actuation of the electric motor 12 causes the gear wheel 16 to rotate about pivot 20.

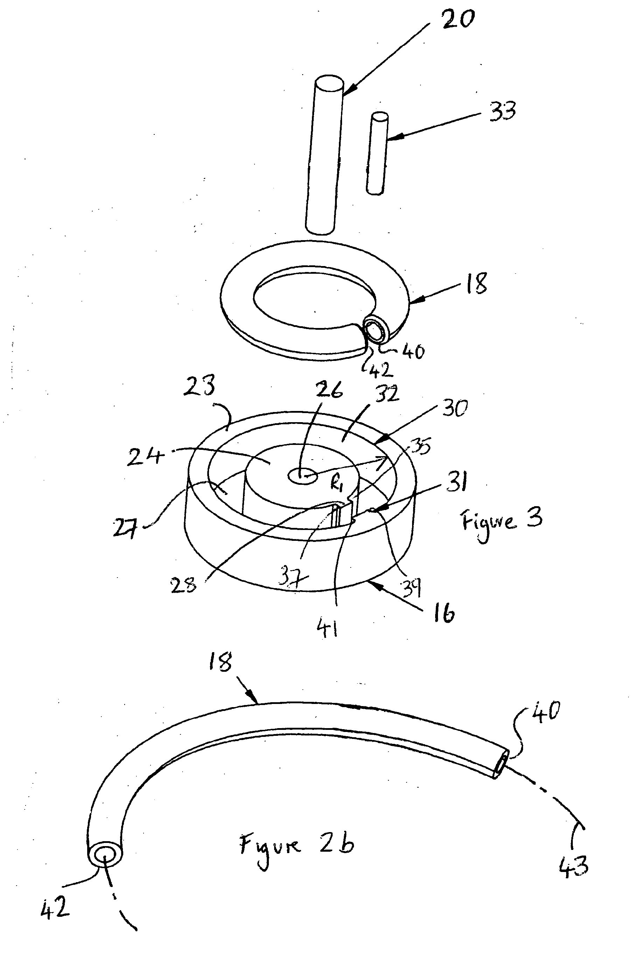

Figure 2 shows the helical return spring 18 in a free state after it has been wound from wire such that it is substantially straight, and defines a straight axis 19.

Figure 2b shows the helical return spring 18 after the straight spring has been preformed such that it is curved prior to assembly onto the gear wheel (see below), with the spring defining a curved axis 43.

The straight spring is preformed by holding it against a curved mandrel while the temperature is raised and lowered in a controlled manner.

Alternatively the curved spring can be produced simultaneously as the spring is wound from wire by feeding the wire around a forming head.

By preforming the spring in this way, the curved spring is placed under less stress when assembled onto the gear wheel (see below), in comparison to a spring which is not preformed into a curve.

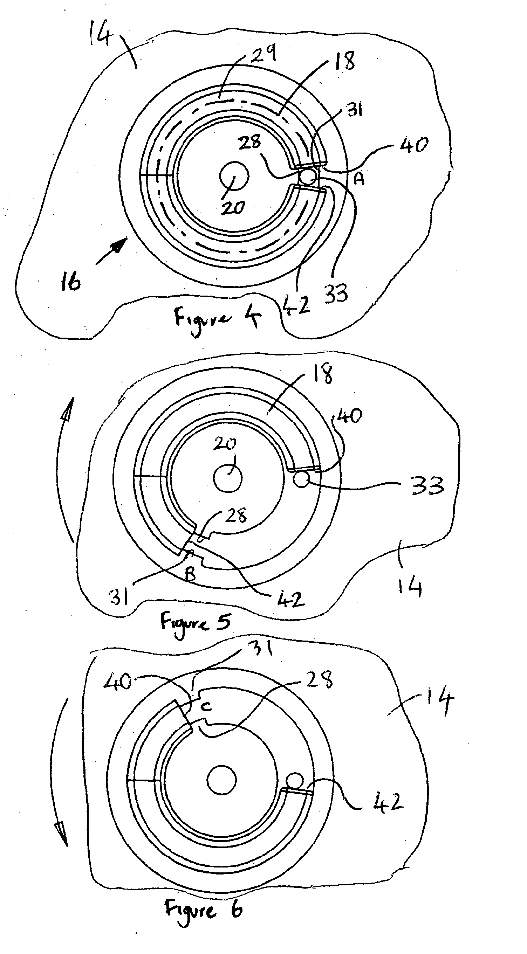

Figure 3 shows components of part of the actuator assembly 10 in more detail.

The gear wheel 16 includes a round spigot 24 having a through hole 26. The spigot 24 has a drive formation in the form of lug 28.

The gear wheel 16 has an outer wall 30, having an internal radius R₁, and an upper face 23. The outer wall 30 also includes a drive formation in the form of a lug 31, positioned such that it is radially in-line with lug 28 of the spigot 24. Lug 28 has a first end 35 and a second end 37. Lug 31 has a first end 39 and a second end 41. The gear wheel 16 has a floor 27 which connects the outer wall 30 to the spigot 24. It can be seen from figure 3 that a recess 32 is defined between the outer wall 30, the spigot 24, and the floor 27.

The helical return spring 18 has a first end 40 and a second end 42. Figure 2b shows spring 18 in its unstressed state prior to assembly.

The actuator assembly further includes a pivot pin 20 which is mounted on and is rotationally fast with the chassis, and a drive pin 33 which is fixed to the chassis 14.

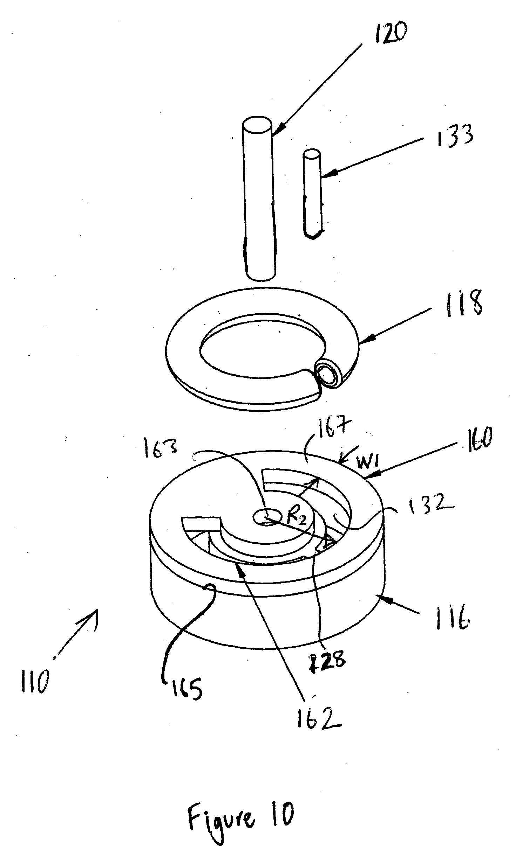

### Figures 4 and 7 show the actuator assembly after it has been assembled as follows:

Firstly the helical return spring 18 is inserted into the recess 32 of the gear wheel 16 by manipulating the helical return spring from its curved form of figure 2b to its circular form of figures 4 and 7, the spring 18 defining a circular axis 29. After insertion, the first end 40 and second end 42 of the helical return spring 18 abut against both lug 28 of the spigot 24 and lug 31 of the gear wheel 16 due to the fact that the helical return spring is longer than the circumferential distance between the first 35,39 and second 37,41 ends of the lugs 28,31. Thus the helical return spring 18 is compressed in the assembled condition. It can be seen from figures 4 and 7 that the spring 18 extends approximately 345 degrees angularly. In other embodiments the angular extension could be different, for example, any angle greater than 270 degrees but less than 360 degrees.

When inserted into the recess 32, the helical return spring 18 is also stressed to a small degree due to the fact that the radius of the recess 32 into which the spring locates is less than the radius of the curve of the helical return spring 18. However, the helical return spring is stressed significantly less in comparison to a spring which is not preformed into a curve prior to insertion into the recess.

The gear wheel 16 is then mounted on the chassis 14 such that the upper face 23 locates against a substantially flat part of the chassis (not shown) such that the recess is covered. The spigot 24 is mounted on pivot pin 20, and is positioned such that the drive pin 33 locates between lugs 28,31 and therefore proximate first and second ends 40,42 of the helical return spring 18.

The spring 18 is restrained, and therefore retained in the recess 32, by the substantially flat part of the chassis.

Operation of the actuator assembly 10 is as follows:

Figures 4 and 7 show the actuator assembly in a neutral position A.

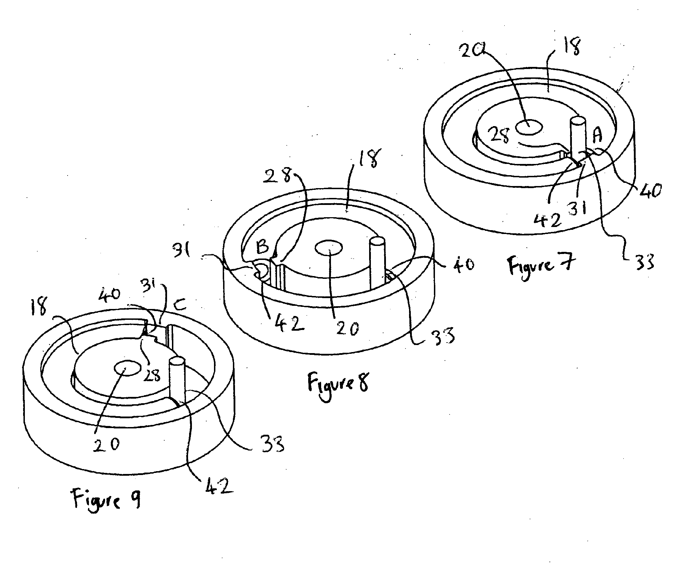

When actuation is required, an electrical current is supplied to the electric motor 12 resulting in gear wheel 16 rotating in a first direction (clockwise when viewing figure 4) about pivot pin 20 towards a first actuated position B shown in figures 5 and 8. Typically the neutral and first actuated positions are separated by 120 degrees. As the gear wheel 16 is rotated in the first direction, the second end 42 of the helical return spring 18 moves with the gear wheel as second ends 37,41 of lugs 28,31 abut against it. The first end 40 of the helical return spring 18 abuts against drive pin 33 and therefore first end 40 of the helical return spring 18 does not move since the drive pin 33 is fixed to the chassis 14. Thus as the gear wheel 16 is rotated in the first direction, the helical return spring 18 is compressed along circular axis 29 due to the relative movement between first 40 and second 42 ends of the helical return spring.

Once the gear wheel has been actuated to the first actuated position, power to the electric motor is cut. This can be achieved, for example, by powering the motor only for a predetermined time and including stop means (not shown) on the assembly, or by activation of a switch (not shown) which cuts the power, or by using a stepper motor.

With the gear wheel in the first actuated position, the second end 42 of the helical return spring 18 acts upon lugs 28,31 so as to bias the gear wheel back towards the neutral position. The gear wheel will remain in the neutral position until the gear wheel is actuated again. Thus after actuation to the first actuated position, the gear wheel is biased towards the neutral position by the helical return spring.

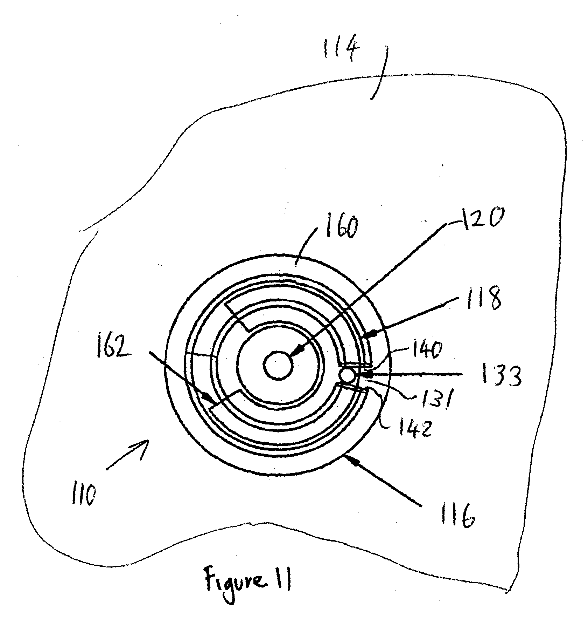

The electric motor can also drive the gear wheel in a second direction (anti-clockwise when viewing figure 4) towards a second actuated position C shown in figures 6 and 9. Operation of the assembly in the second direction is identical to that in the first direction except that, as the gear wheel 16 is rotated in the second direction, the first end 40 of the helical return spring 18 moves with the gear wheel as first ends 35,29 of lugs 28,31 abut against it. The second end 42 of the helical return spring 18 abuts against drive pin 33 and therefore second end 42 of the helical return spring 18 does not move since the drive pin 33 is fixed to the chassis 14. Thus as the gear wheel 16 is rotated in the second direction, the helical return spring 18 is compressed along circular axis 29 due to the relative movement between first 40 and second 42 ends of the helical return spring.

It can also be seen from figures 4 to 9 that the neutral position A lies between the first B and second C actuated positions.

Rotation of the gear wheel in either the first or second direction causes output 22 to simultaneously rotate, thereby causing the linkage 24 to move, and the device to which it is connected to move.

It will be appreciated that as the gear wheel moves in the first or second direction, one or other end of the helical return spring also moves in the first or second direction along the circular axis 29, and that a plane defined by the coils of the spring lies substantially perpendicular to the first and second directions, i.e. substantially perpendicular to the circular axis. In this way, the stress associated with compressing the spring in the first or second directions is more evenly distributed through the spring than with spring where the coils lie parallel to the first and second directions, and thus the fatigue life is increased, and the likelihood of failure reduced.

By providing a spring which is preformed to a curved shape prior to insertion into the recess, there is less wear between the gear wheel and the spring.

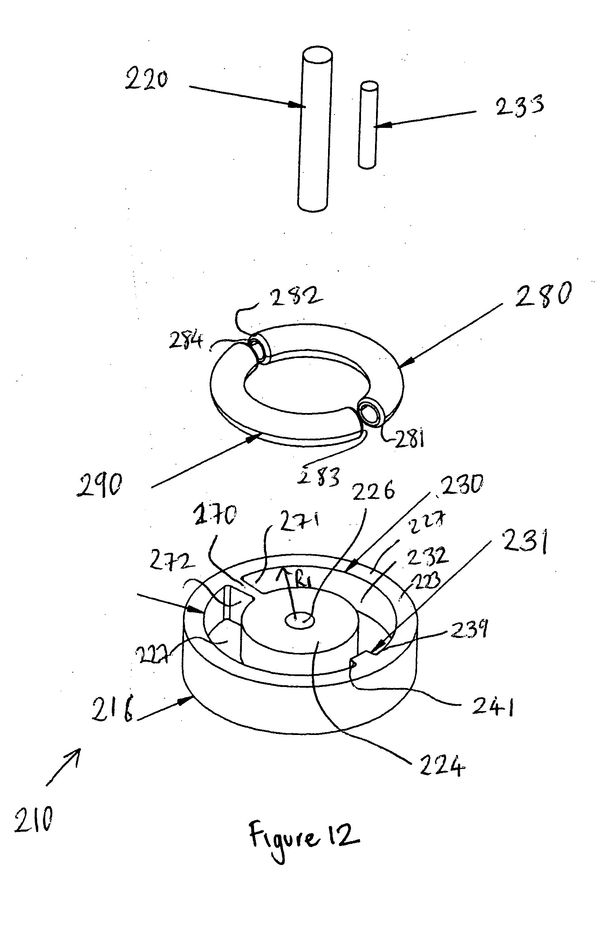

With reference to figures 10 and 11 there is shown part of an actuator assembly 110 according to a second embodiment of the present invention, with features identical or similar to the actuator assembly 10 numbered 100 greater.

The second embodiment is identical to the first embodiment except the actuator assembly further includes a retainer 160, which acts to retain the spring in the recess in place of the substantially flat part of the chassis (as mentioned above) of the first embodiment.

The retainer includes an arcuate slot 162 which extends angularly approximately 240 degrees such that it corresponds to the angular separation of the first and second actuated positions, thereby allowing full movement of the pin 133 between the first and second actuated positions (see below). The slot is arranged such that it creates an outer wall 167 having a width W1. The slot has an internal radius R₂.

The retainer also includes a hole 163 to allow the pivot pin 120 to pass therethrough.

Figure 11 shows the actuator assembly 110 after it has been assembled as follows:

Firstly, the retainer 160 is positioned such that the slot is symmetrically disposed either side of the lug 128, and bonded to an upper surface 165 of the gear wheel 116 such that it is rotationally fast therewith. Alternatively or additionally, the retainer can include a snap-fit feature (not shown) which assists in locating and securing the retainer to the gear wheel. It is important that the retainer is sufficiently secured to the gear wheel such that it is prevented from being forced off due to buckling of the helical return spring during assembly or use (see below).

In this embodiment, the retainer and the gear wheel are provided separately, and are typically made from the same material. The retainer is rotationally fast with the gear wheel.

The helical return spring 118 is then inserted through slot 162, and into recess 132 such that it locates relative to lugs 128, 131.

When inserting the helical return spring into the recess, there is a tendency for the spring to buckle as it is manipulated. By providing a retainer, there is less likelihood of the helical return spring buckling to such an extent since it is restrained by the retainer. Thus assembly of the spring onto the gear wheel is greatly facilitated.

It can be seen from figure 10 that the spring is restrained, and therefore retained within the recess, due to the fact that the part of the retainer overlaps the recess 132. In this embodiment this is achieved by the fact that the slot only extends through 240 degrees, i.e. less than 360 degrees. Secondly, the slot 162 is arranged such that the width W1 of the outer wall is such that part of the outer wall extends over part of the recess, i.e. the internal radius R₁ of the gear wheel (see figure 3) is greater than the internal radius R₂ of the slot.

The gear wheel 116 is then assembled onto the chassis in the same way as in the first embodiment, with the addition that drive pin 133 locates through slot 162, and that since it is the retainer which retains the spring within the recess as opposed to the substantially flat part of the chassis, there is no possibility of the spring escaping from the recess during mounting on the chassis. Thus assembly of the gear wheel onto the chassis is easier when a retainer is used.

Operation of the actuator assembly is identical to the first embodiment. It can be seen from figures 10 and 11 that provision of the slot 162 allows the gear wheel to rotate in the first or second directions relative to the drive pin 133.

With reference to figures 12 to 15 there is shown part of an actuator assembly 210 according to a third embodiment of the present invention with features identical or similar to the actuator assembly 10 (first embodiment) numbered 200 greater.

In the third embodiment, gear wheel 216 replaces gear wheel 16 of the actuator assembly 10 of figure 1.

The actuator assembly 210 uses two helical return spring rather than the one helical return spring of the first embodiment, with a first helical return spring 280 having a first end 281 and a second end 282, and a second helical return spring having a first end 283 and a second end 284. It can be seen from figure 12 that the first 280 and second 290 helical return spring are identical. Both springs are preformed such that they are curved in the same way as the first embodiment.

The gear wheel 216 includes a round spigot 224 having a through hole 226.

The gear wheel 216 has an outer wall 230, having an internal radius R₁, and an upper face 223. The outer wall 230 also includes a stop in the form of lug 231. The gear wheel has a drive formation in the form of lug 270 extending between the spigot 224 and the outer wall 230, and arranged such that it is located radially opposite the lug 231. Lug 231 has a first end 239 and a second end 241. Lug 270 has a first end 271 and a second end 272. The gear wheel 216 has a floor 227 which connects the outer wall 230 to the spigot 224. It can be seen from figure 12 that a recess 232 is defined between the outer wall 230, the spigot 224, and the floor 227.

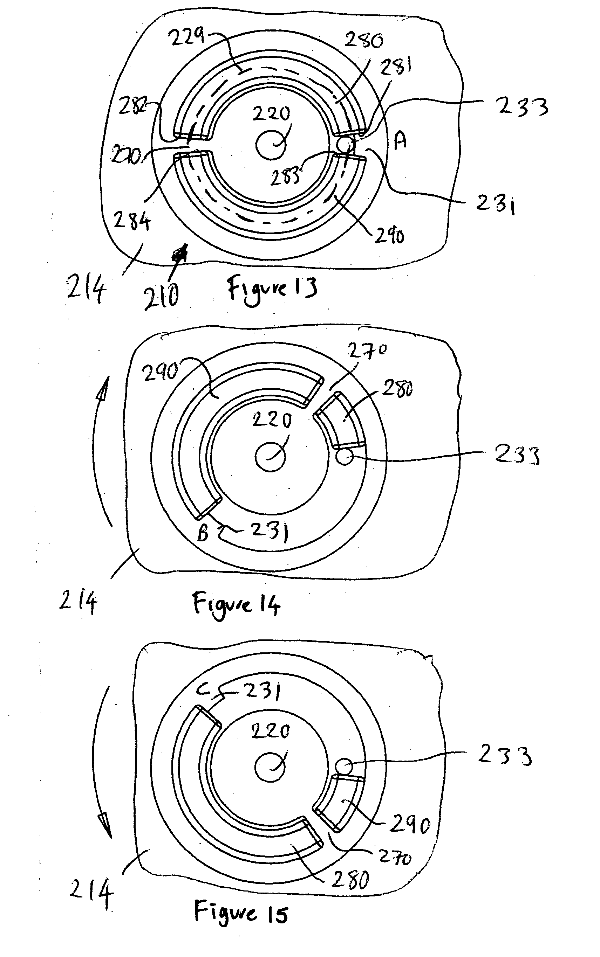

Figures 13 shows the actuator assembly after it has been assembled as follows:

Firstly the first 280 and second 290 helical return springs are inserted into the recess 232 of the gear wheel 216 by manipulating them from their curved form (not shown, but identical to that of figure 2b) to their circular form of figure 13, the springs both defining a circular axis 229. After insertion, the first end 281 of the first helical return spring 280 abuts against the first end 239 of lug 231, the second end 283 of the first helical return spring 280 abuts against the first end 271 of lug 270, the first end 283 of the second helical return spring 290 abuts against the second end 241 of lug 231, and the second end 284 of the second helical return spring 290 abuts against the second end 272 of lug 270, due to the fact that the helical return springs are longer than the circumferential distance between the ends of the lugs 239,270. Thus the helical return springs 218 are both compressed in the assembled condition. It can be seen from figure 13 that the first and second helical return springs each extend approximately 170 degrees angularly. In other embodiments the angular extension could be different, for example, any angle greater than 160 degrees but less than 180 degrees.

The gear wheel 216 is then mounted on the chassis 214 by mounting the spigot 224 on pivot pin 220, and positioned such that the drive pin 233 locates next to lug 231, and therefore proximate the first ends 281, 283 of the first and second helical return springs. As in the first embodiment, the gear wheel is mounted on the chassis such that the springs are retained in recess 232 by the substantially flat part of the chassis (not shown).

Operation of the actuator assembly 210 is as follows:

Figures 13 shows the actuator assembly in a neutral position A.

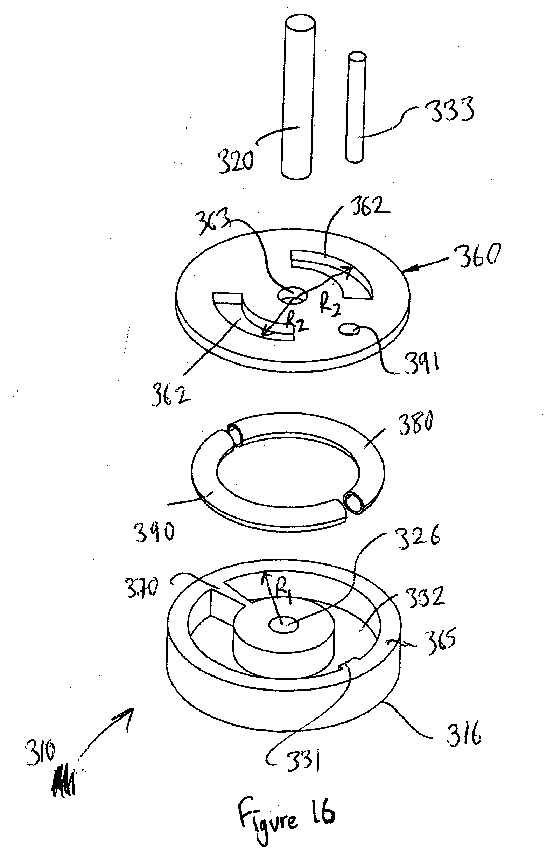

When actuation is required, an electrical current is supplied to the electric motor 12 resulting in gear wheel 216 rotating in a first direction (clockwise when viewing figure 13) about pivot pin 220 towards a first actuated position B shown in figure 14. Typically the neutral and first actuated positions are separated by 120 degrees. As the gear wheel 216 is rotated in the first direction, the second end 282 of the first helical return spring 280 moves with the gear wheel as first end 271 of lug 270 abuts against it. The first end 281 of the first helical return spring 280 abuts against drive pin 233 and therefore first end 281 of the first helical return spring 280 does not move since the drive pin 233 is fixed to the chassis 214. Thus as the gear wheel 216 is rotated in the first direction, the first helical return spring 280 is compressed along circular axis 229 due to the relative movement between first 281 and second 282 ends of the first helical return spring.

Once the gear wheel has been actuated to the first actuated position, power to the electric motor is cut. This can be achieved, for example, by powering the motor only for a predetermined time and including stop means (not shown) on the assembly, or by activation of a switch (not shown) which cuts the power, or by using a stepper motor.

With the gear wheel in the first actuated position, the second end 282 of the first helical return spring 280 acts upon the first end 271 of lug 270 so as to bias the gear wheel back towards the neutral position. The gear wheel will remain in the neutral position until the gear wheel is actuated again. Thus after actuation to the first actuated position, the gear wheel is biased towards the neutral position by the helical return spring.

As the gear wheel is rotated in the first direction, the first and second ends 283,284 of the second helical return spring 290 also move with the gear wheel since lugs 231,270 move with the gear wheel, and thus the ends of the second helical return spring do not move relative to each other. Thus as the gear wheel is rotated in the first direction, the second helical return spring 280 is not compressed, and therefore the motor does not have to work against the second helical return spring when driving the gear wheel in the first direction. Thus when in operating in the first direction, the second helical return spring can be classed as idle.

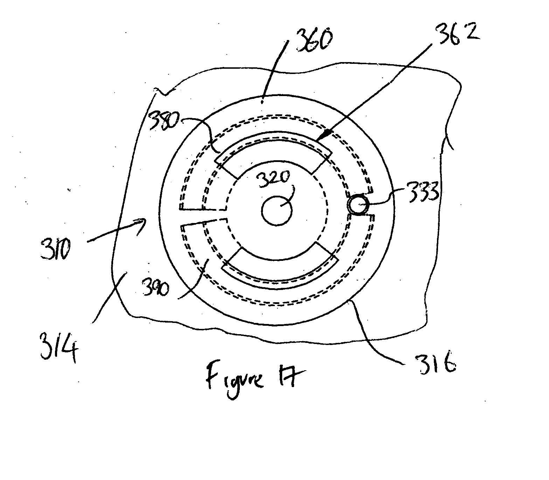

The electric motor can also drive the gear wheel in a second direction (anti-clockwise when viewing figure 13) towards a second actuated position C shown in figure 15. Operation of the assembly in the second direction is identical to that in the first direction except that, as the gear wheel 216 is rotated in the second direction, the second end 284 of the second helical return spring 290 moves with the gear wheel as second end 272 of lug 270 abuts against it. The first end 283 of the second helical return spring 290 abuts against drive pin 233 and therefore first end 283 of the second helical return spring 290 does not move since the drive pin 233 is fixed to the chassis 214. Thus as the gear wheel 216 is rotated in the second direction, the second helical return spring 290 is compressed along circular axis 229 due to the relative movement between first 281 and second 282 ends of the second helical return spring.

As the gear wheel is rotated in the second direction, the first and second ends 281,282 of the first helical return spring 280 also move with the gear wheel since lugs 231,270 move with the gear wheel, and thus the ends of the first helical return spring do not move relative to each other. Thus as the gear wheel is rotated in the second direction, the first helical return spring 280 is not compressed, and therefore the motor does not have to work against the first helical return spring when driving the gear wheel in the second direction. Thus when operating in the second direction, the first helical return spring can be classed as idle.

It can also be seen from figures 13 to 15 that the neutral position A lies between the first B and second C actuated positions.

It is possible to use two helical return springs having a smaller coil diameter, and smaller wire diameter in comparison to the one spring of the first embodiment, and still provide the same bias force.

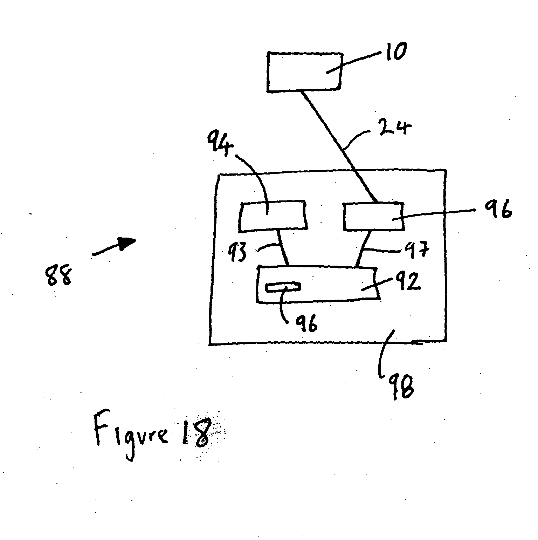

With reference to figures 16 and 17 there is shown part of an actuator assembly 310 according to a fourth embodiment of the present invention, with features identical or similar to the actuator assembly 210 (third embodiment) numbered 100 greater.

The fourth embodiment is identical to the third embodiment except the actuator assembly further includes a retainer 360, in the same way as the second embodiment differed from the first embodiment.

In this embodiment, since there are two helical return springs 380,390, the retainer 360 includes two arcuate slots 362 to permit their insertion into recess 332. Both slots have an internal radius R₂.

The retainer also includes a hole 391 to allow the drive pin 333 to pass therethrough.

Figure 17 shows the actuator assembly 310 after it has been assembled as follows:

Firstly, the retainer 360 is positioned such that it mates with an upper surface 365 of the gear wheel 316. Pivot pin 320 is then passed through hole 363 of the retainer 360, and then through hole 326 of the gear wheel 316. The clearance between the pivot pin 320 and holes 363,326 is such that the retainer is retained on the gear wheel during assembly. However, in contrast to the second embodiment where the retainer is rotationally fast with the gear wheel, in this embodiment, the gear wheel is free to rotate relative to the retainer. This can be achieved by, for example, a snap-fit connection.

Both helical return springs 380,390 are then inserted through their respective slots 162, and into the recess such that they locate relative to lugs 331,370 in the same way as in the third embodiment.

The gear wheel 316 is then mounted onto the chassis 314 such the drive pin 333 passes through hole 391 of the retainer 360, and locates adjacent lug 331 of the gear wheel 316, and pivot pin 320 locates in its mounting (not shown) on the chassis 314.

As with the second embodiment by employing a retainer, it can be seen from figure 16 that the springs are restrained, and therefore retained within the recess, due to the fact that part of the retainer overlaps the recess 332. This is achieved in the same way as the second embodiment, i.e. the internal radius R₂ of the outer wall 330 of the gear wheel is greater than the internal radius R₂ of the slot, and the slots do not extend through 360 degrees. Furthermore, since the retainer 360 and gear wheel 316 are free to rotate relative to each other, the slots do not need to allow for relative movement between the drive pin and the retainer as is the case of the second embodiment where the retainer and the gear wheel are rotationally fast. Thus the slots can have a smaller angular extension, and therefore a greater part of the retainer can be used to restrain the springs.

Operation of the actuator assembly is identical to the third embodiment with the gear wheel 316 rotatable in the first and second directions relative to the chassis 314.

The actuator assemblies described in figures 1 to 17 can be used to drive a linkage connected to the gear wheel in the first and second direction. The actuator assemblies are arranged such that after being driven in the first or second direction, the gear wheel is returned to the neutral position under the action of the helical return spring.

The linkage can be connected to a component of a device, such that the component can be powered in first or second directions to first or second component positions. Typically, such devices also include manual means to move the component between the first and second component positions, both for convenience and in the event of power failure. Thus after power actuating the component in the first or second direction, the fact that the actuator is returned to the neutral position means that if the manual means is used to move the component, it is not necessary to manually back drive the motor, thus less effort is required.

An example of a device which is powered in first and second directions is a powered locking latch.

With reference to figure 18 there is shown a latch assembly 88 comprising a latch 98 and the actuator assembly 10.

The latch 88 includes a locking mechanism 92 which is connected via linkage 93 to manual locking means 94, and via linkage 97 to powered locking means 96. The manual locking means 94 is typically connected to one of a sill button (not shown), an inside release lever (not shown), and a key mechanism. (not shown). The locking mechanism 92 includes a lock link 96.

The actuator assembly 10 is connected to the powered locking means 94 via the linkage 24, such that the electric motor 12 can drive the linkage in first or second directions. Movement of the linkage in the first direction from the neutral position moves the lock link 96 to a first component position where the latch is locked, and movement of the linkage in the second direction from the neutral position moves the lock link 96 to a second component position where the latch is unlocked. In other embodiments the component positions could correspond to, for example, child safety on and child safety off positions.

After the electric motor has driven the lock link 96 to the locked position, the motor is returned to the neutral position by the bias of the helical spring. The latch can now be power unlocked by driving the motor in the second (opposite direction), or manually unlocked via the manual locking means. Since the motor is in the neutral position, the manual locking means does not have to manually back drive the motor, and therefore operation of the sill button, key, or inside release lever does not require the extra effort of having to manually back drive the motor.

Thus it can be seen that by employing the actuator assembly of the present invention in a powered locking latch, the motor does not have to be back driven, be it manually or by operating the motor in the opposite direction.

In other embodiments, the actuator assembly 10 could be replaced by any of the actuator assemblies of figures 10 to 17.

In another embodiment, the gear wheel could be directly connected to the locking mechanism, as opposed to via the linkage.

## Claims

**1.** A sub-assembly for an actuator assembly, including an output member, and a spring arrangement having at least one helical return spring, the output member being rotatable between a neutral position, a first actuated position, and a second actuated position, the neutral position being between the first and second actuated positions, the output member capable of being moved from the neutral position to the first actuated position and to the second actuated position, in which the spring arrangement is arranged so as to bias the output member towards the neutral position from the first actuated position, and is also arranged to bias the output member towards the neutral position from the second actuated position,
the output member including a recess for receiving the at least one helical return spring,
the sub-assembly further including a retention means for retaining the at least one helical return spring in the recess,
the retention means including a slot arrangement to allow insertion of the at least one helical return spring into the recess.

**2.** A sub-assembly according to claim 1 in which the retention means comprises a retainer.

**3.** A sub-assembly according to claim 1 or 2 in which the slot arrangement comprises a single slot which extends through an angle equivalent to the angular separation of the first and second actuated positions.

**4.** A sub-assembly according to any one of claims 1 to 3, the spring arrangement comprising a single helical return spring, in which a first end of the helical return spring biases the output member from the first actuated position towards the neutral position, and a second end of the helical return spring biases the output member from the second actuated position towards the neutral position.

**5.** A sub-assembly according to claim 4 in which the sub-assembly is mounted on a body, the sub-assembly further including an abutment having a first end attached to the body and a second end which reacts against the first and second end of the helical return spring when the output member is moved to the second and first positions, respectively.

**6.** A sub-assembly according to claim 1 or 2 in which the slot arrangement comprises a pair of slots which in combination extend through an angle equivalent to the angular separation of the first and second actuated positions.

**7.** A sub-assembly according to any one of claims 1, 2, or 6, the spring arrangement including a first helical return spring and a second helical return spring, in which the first helical return spring biases the output member from the first actuated position towards the neutral position, and the second helical return spring biases the output member from the second actuated position towards the neutral position.

**8.** A sub-assembly according to claim 7 when dependant on claim 2 in which the sub-assembly further includes an abutment having a first end which is fixed for rotation with the retainer and a second end which reacts against the second ends of the first and second helical return springs when the output member is moved to the second and first positions, respectively.

**9.** A sub-assembly according to any one of claims 2 to 8, when dependant on claim 2, in which the slot arrangement defines an outer wall in the retainer, and the outer wall partially extends over the recess.

**10.** A sub-assembly according to any preceding claim in which the at least one helical spring is arranged such that a plane defined by a coil of the spring lies substantially perpendicular to the direction in which the spring is compressed when the output member is rotated.

**11.** A sub-assembly of any preceding claim in which the output member is a gear wheel.

**12.** A sub-assembly according to any preceding claim in which the at least one helical return spring is preformed to form a curve.

**13.** A latch assembly including a latch, an actuator, and a sub-assembly according to any preceding claim, in which the actuator is operable to move a component of the latch to a first component position and a second component position, thereby changing the latch state.

**14.** A latch assembly according to claim 13 in which the first component position corresponds to a locked state of the latch, and the second component position corresponds to an unlocked state of the latch.

**16.** A method of assembling a sub-assembly for an actuator assembly, including the steps of:-
a) providing an output member having a recess for receiving at least one helical return spring
b) providing at least one helical return spring
c) providing retention means for retaining the at least one helical spring in the recess, the retention means including at least one slot to allow insertion of the at least one helical spring into the recess, the method further including the steps of
d) inserting the at least one helical spring through the at least one slot into the recess.

**17.** The method of assembling the output member assembly of claim 16 wherein the retainer is attached to the output member to prevent rotation therebetween before the completion of step d).

**18.** The method of assembling the output member assembly of claim 16 wherein the retainer is attached to the output member for rotation therebetween before the completion of step d).
